# EUROPÄISCHE PATENTSCHRIFT

(11) **EP 2 025 610 B1**
(45) Veröffentlichungstag und Bekanntmachung des Hinweises auf die Patenterteilung: **16.09.2009**
(21) Anmeldenummer: 07015955.3
(22) Anmeldetag: 14.08.2007
(51) Int. Cl.: B65D 19/00

(54) **Transportpalette mit Platte aus papierhaltiger Masse**
Transport pallet base made of a material containing paper
Palette de transport dotée d'une plaque en masse comportant du papier

(43) Veröffentlichungstag der Anmeldung: 18.02.2009
(73) Patentinhaber: Easypal AG, 8808 Pfäffikon SZ (CH)
(72) Erfinder: Bruhn, Hans-Peter, PT-8006-701 St. Barbara / Faro (PT)
(74) Vertreter: Raffay & Fleck

(56) Entgegenhaltungen:
- EP-A- 0 423 709
- EP-A- 1 614 632
- EP-A- 1 803 694
- WO-A-20/04090022
- DE-U1- 9 410 132
- US-A- 3 434 435
- US-A- 5 067 418

## Beschreibung

Die Erfindung betrifft eine Platte, insbesondere für Transportpaletten, nach dem Oberbegriff des Anspruches 1.

Derartige Platten sind beispielsweise aus der WO 2004/090022 A bekannt, die jedoch nach ihrem Hauptanspruch einen Wassergehalt von mindestens > 8,0 Gew.% bis zu 15 Gew.% fordert, um auf aufwändige Vortrocknung des verwendeten biologischen Fasermaterials verzichten zu können.

Desweiteren ist aus der EP 0 423 709 A1 eine Palette bekannt, deren Deck- und gegebenenfalls Bodenleisten aus einem Trägerteil und einer Beschichtung bestehen, wobei das Trägerteil beispielsweise ein Hohlprofil aus Metall sein kann, das zur Bildung einer Ummantelung allseitig von vorzugsweise aus KFZ-Altreifen gewonnenem Gummi umgeben ist.

Im Stand der Technik sind ferner verschiedene Ansätze bekannt, Standardpaletten aus Holz durch Paletten aus Kartonmaterial zu ersetzen. Paletten aus Kartonmaterial haben den Vorteil, dass sie vom Empfänger der Ware dem Papierrecyclingkreislauf zugeführt werden können. Aber auch aus Gewichtsgründen finden solche Paletten mehr und mehr Verwendung, da sie leichter sind als Paletten aus Holz und insofern geringere Transportkosten verursachen.

Aus der DE 201 03 902 U1 ist eine aus Karton oder Wellpappe bestehende Palette bekannt, welche Füße aufweist, die aus mehreren, parallel und mit Abstand zueinander verlaufenden und gemeinsam mit dem Oberdeck einstückig ausgebildeten Kufen bestehen. In der gefalteten Anordnung haben die Kufen einen dreieckigen oder viereckigen Querschnitt.

Aus der DE 195 23 492 A1 ist eine Palette bekannt, die Rollenkerne von Papier-, Teppich- und ähnlichen Materialrollen als Tragelemente verwendet, wobei die Rollenkerne zweilagig übereinander und senkrecht zueinander angeordnet sind.

Die EP 0 693 430 B1, die EP 0544 659 B1 und die EP 0 611 354 zeigen Kartonpaletten, die Grundelemente mit einem dicht gepackten festen Kern aus Wellpappe aufweisen, sowie eine Deckplatte aus Wellpappe, die auf den Grundelementen befestigt ist.

Aus der WO 95/25672 ist ein Paletten-System bekannt, welches aus einem flachen Oberdeck besteht, das mit röhrenförmigen Kufen versehen wird. Die Kufen sind aus einem flachen Karton gefaltet. Zur Verstärkung der Kufen, werden separate quaderförmige Verstärkungselemente in die Kufen eingebracht, die beispielsweise aus aufgewickeltem oder bienenwabenförmigem Kartonmaterial bestehen.

Schließlich ist aus der EP 1 588 952 B2 eine Palette mit Füßen aus eckigem Pappkartonrohr, in dem durch Versteifungen Kammern ausgebildet werden, und Querverstrebungen unter der Deckplatte bekannt.

Des Weiteren ist aus der WO 2006/002920 A2 eine Palette aus gekreuzten Halbrohren mit Rohren als Verstärkungen bekannt.

Die Wellpapp-Kartonpaletten des Standes der Technik können in Bezug auf Festigkeit, Stabilität, Einfachheit der Herstellung und Materialverbrauch besonders in Kombination nicht allen Anforderungen gerecht werden. Weiterhin sind die bekannten Wellpapp-Kartonpaletten wegen der Kapillarwirkung des Kartonmaterials anfällig für Wasser und Feuchtigkeit.

Auf der anderen Seite fallen große Menge an Verpackungen als Müll an, die aus einem Verbund unter anderem bestehend aus Papier und thermoplastischen Materialien aufgebaut sind.

Solche Verpackungen müssen meist auf Grund ihrer Zusammensetzung aufwendig recycelt/entsorgt werden.

Es besteht daher der Bedarf an einer Platte und daraus herstellbare Transportpalette, die leichter herzustellen ist, eine höhere Stabilität aufweist, weniger oder kostengünstigeres Material, gegebenenfalls solches Abfallmaterial, das sonst aufwendig entsorgt/recycelt werden müsste, verwendet und gegen Feuchtigkeit besser geschützt ist.

Die oben genannten Probleme und Anforderungen werden gelöst durch eine Platte gemäß Patentanspruch 1, sowie durch eine Transportpalette gemäß Patentanspruch 4. Die Unteransprüche 2 bis 3 beziehungsweise 5 bis 10 geben vorteilhafte Weiterbildungen an.

Gegenüber dem Stand der Technik besitzt die erfindungsgemäße Platte also Restwassergehalte von maximal 2 Gew.% und benötigt keine Beschichtungen oder Ummantelungen. Dadurch, dass die Unterseite mehrere zumindest teilweise integrierte Rohre aufweist, wird die Platte stabilisiert.

Zur Herstellung einer Transportpalette werden die Untertraversen jeweils mit mindestens zwei Füßen verbunden, auf denen die Konstruktion ruht. Dabei können die Untertraversen und Palettenfüße aber auch aus einem Stück gefertigt werden oder gemeinsame Teile aufweisen. Durch eine solche verbundene Konstruktion der Palettenfüße und Untertraversen wird die Stabilität weiter erhöht. Auf den Füßen und den Untertraversen ist die Platte mit den zumindest teilweise integrierten Rohren angebracht.

Für die Masse, aus denen die Platte besteht, können wieder verwertbare Verpackungsabfälle oder gebrauchte Verpackungen (beispielsweise Tetrapacks oder ähnliches) verwendet werden. Das Papiermaterial wird zerfasert und unter Zugabe von Stärke (6-8 Gew.%) und Wasser vorbereitet. Durch die Zugabe des Wassers wird das Volumen der Papiermasse reguliert. Die zu komprimierende Grundmasse wird in Form von Pellets, Granulat oder ähnlichem hergestellt. Mittels eines Extruders wird die Grundmasse bei beispielsweise 160°C bis 180°C zum papierhaltigen Basismaterial. Das aus dem Extruder austretende Basismaterial enthält einen Restwasseranteil von i.d.R. weniger als 2 Gew.%. Beim Formen der Platte mittels Düsen wird in der Regel eine Dicke der Platte zwischen 4mm und 12mm gewählt. Je nach Anforderung an die Transportpalette oder Platte können auch durch ein Profilwerkzeug andere Stärken produziert werden.

Eine solche Platte ist gegenüber vorbekannten Deckplatten aus Papier oder Karton besonders stabil, steif und resistent gegen Feuchtigkeit und anderen Einflüssen.

Bei der Wahl der Zusammensetzung ist es vorteilhaft, den thermoplastischen Materialanteil so zu wählen, dass er den gesetzlichen Bestimmungen derart genügt, dass die Transportpalette (nach Gebrauch) nicht aufwendig entsorgt werden muss. In der Regel wird der thermoplastische Materialanteil daher im Bereich von 2 bis 4,9 Gew.% liegen. Auf einen thermoplastischen Materialanteil kann aber auch verzichtet werden. Allerdings kann der Einsatz von Verbundverpackungen mit Kunststoffanteil besonders vorteilhaft sein, da dadurch eine Entsorgung der Verbundverpackungen entfällt.

Die Papierrohre werden direkt nach der Produktion der Papiermasse durch den Extruder in die noch warme und formbare Masse zumindest teilweise eingebracht. Die aus der Platte teilweise hervorstehenden Rohre werden in passende Ausfräsungen der Untertraversen und den Füßen passgenau eingebracht und verklebt oder anderweitig befestigt. Die Rohre können eckige, ovale, runde oder sonstige Querschnitte aufweisen. Es ist offensichtlich, dass somit auch die Aussparungen/Ausfräsungen in den Untertraversen/Füßen unterschiedliche Querschnitte aufweisen können.

Besonders vorteilhaft ist es, gemäß Anspruch 2 oder 5, die Rohre in der Platte aus Karton-, Papier- und/oder Recyclingpapierlagen gegebenenfalls unter Zugabe von Klebstoffen zu wickeln. Dadurch kann die Platte als ganzes einfach recycelt werden. Auch werden Gewicht und Produktionsaufwand dadurch reduziert.

Dementsprechend ist es auch vorteilhaft, dass Palettenfüße und Untertraversen ebenfalls aus Karton-, Papier- und/oder Recyclingpapierlagen und gegebenenfalls Klebstoff zu fertigen.

Besonders stabil sind erfindungsgemäße Paletten, wenn gemäß Anspruch 7 Palettenfüße und Untertraversen Aussparungen/Ausfräsungen aufweisen, die so beschaffen sind, dass sie einen Teil der aus der Platte herausragenden Teile der Rohre passgerechte aufnehmen können und die Palettenfüße und Untertraversen so an die Platte angebracht werden, dass die Aussparungen/Ausfräsungen die Rohre teilweise aufnehmen und dort mit den Rohren verbunden, insbesondere verklebt werden.

Gemäß Anspruch 8 ist die Transportpalette besonders tragfähig, wenn für die Palettenfüße Kartonrohr mit eckigem Querschnitt verwendet wird und die Stirnöffnungen des zur Platte hin gegebenenfalls offenen Kartonrohrs durch Last tragende Seitenteile verschlossen werden, wobei die Seitenteile jeweils geformt sind und stehende Rohre beinhalten.

Besonders vorteilhaft ist es, gemäß Anspruch 9 die Untertraversen mit Untertraversenrohren, die aus Papier- oder Recyclingpapierlagen gewickelt sind, zu versteifen. Dadurch kann eine größere Stabilität und Steifheit der Transportpalette erreicht werden.

Eine erfindungsgemäße Platte kann beispielsweise bei vorbekannten Transportpaletten und Palettenfüßen als Ersatz für die dort verwendete Obertraversen eingesetzt werden und so zu einer deutlichen Erhöhung der Stabilität und Beständigkeit, einer Reduzierung des Herstellungsaufwands und zur Vermeidung der Entsorgung von Verbundverpackungsmaterialien führen.

Weitere Vorteile und Merkmale der Erfindung ergeben sich aus der nachfolgenden Beschreibung eines Ausführungsbeispieles anhand der beigefügten Figuren. Dabei zeigen:
- Fig. 1: Seitliche Ansicht einer erfindungsgemäßen Palette, verborgene Kanten gestrichelt;
- Fig. 1A: Untertraverse mit Füßen und Einfräsungen zur Aufnahme der Platte;
- Fig. 2: Platte von oben;
- Fig. 3: Platte mit Rohren von oben, verborgene Kanten gestrichelt;
- Fig. 4: Platte mit Rohren von der Seite, verborgene Kanten gestrichelt;
- Fig. 5: Palettenfuß und
- Fig. 5A: Aufbau der Palettenfüße

Die Figuren stellen rein schematische Darstellungen eines Ausführungsbeispiels dar und sind insbesondere nicht maßstabsgerecht. Die Figuren sind ferner nicht beschränkend.

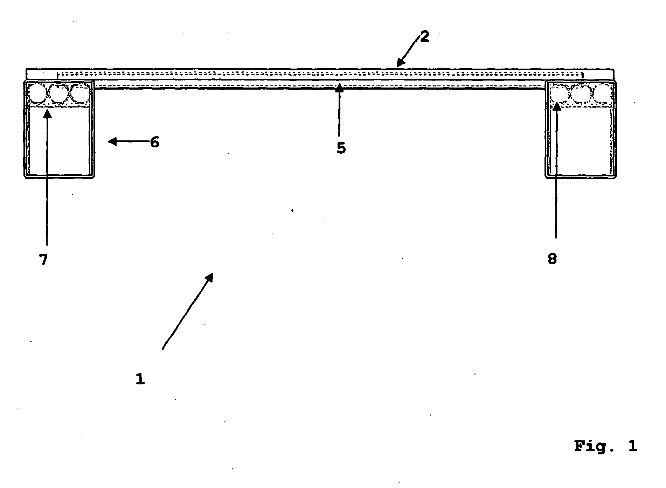

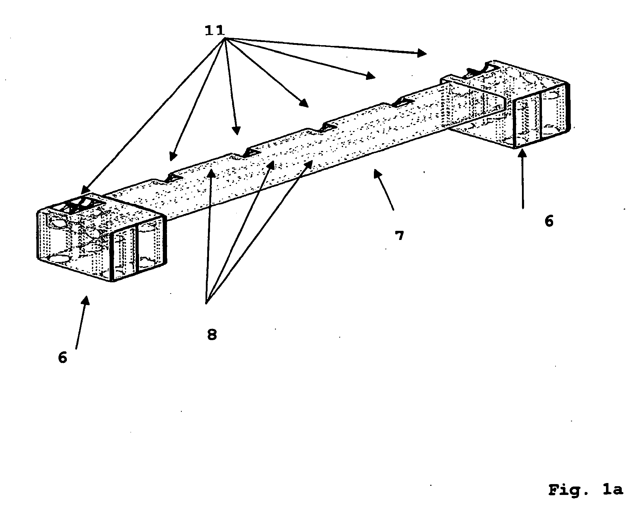

In Fig. 1 ist der Aufbau einer erfindungsgemäßen Palette von der Seite gezeigt. Zu sehen sind gestrichelt auch verborgene Kanten. Auf den zwei sichtbaren Palettenfüßen 6, die mit den Untertraversen 7 verbunden sind und auf diesen Untertraversen 7 ruht befestigt über die Rohre 5 die Platte 2. In die Untertraversen sind Untertraversenrohre 8 eingebracht.

Die auf die Platte durch die Nutzlast aufgebrachte Kraft wird über die Platte 2 und die Rohre 5 auf die Untertraversen 7 und die mindestens an den Ecken der Platte 2 angeordneten Palettenfüße 6 übertragen. Die zwischen Palettenfüßen angeordneten Untertraversen 7, unterstützt durch die Untertraversenrohre 8, verteilen die Kraft auf die an ihnen befestigten Palettenfüße 6. Die Palettenfüße 6 übertragen die Kraft auf den Boden.

Zu erkennen ist auch, dass sich die Ausfräsungen 11 auch in die Untertraversenrohre 8 erstrecken. Durch das Einbringen der Rohre 5 wird jedoch der Stabilitätsverlust der Untertraversenrohre 8 mindestens weitestgehend ausgeglichen. Zu erkennen ist des Weiteren, dass die Rohre 5 sich nicht bis zu den Kanten der Platte 2 erstrecken. Dadurch kann ein besseres Abschließen der Platte 2 mit den Untertraversen 7 erreicht werden. Auch bringt eine Verlängerung der Rohrlänge der Rohre 5 gegenüber der in Fig. 1 gezeigten Länge keinen Stabilitätsvorteil.

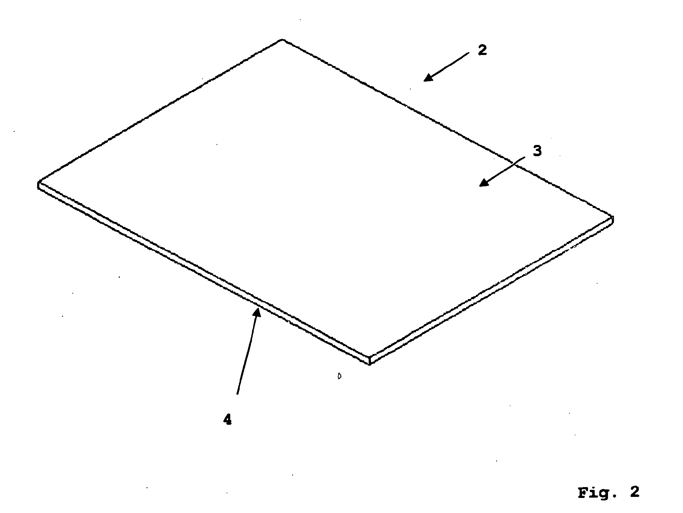

In Fig. 2 ist die Platte 2 von oben dargestellt. Zu erkennen ist, dass sie zweckmäßigerweise flach und eben ist. Die genauen Anforderungen an die Beschaffenheit der Plattenoberfläche richten sich nach den Anforderungen, die je nach Einsatzzweck unterschiedlich sein können.

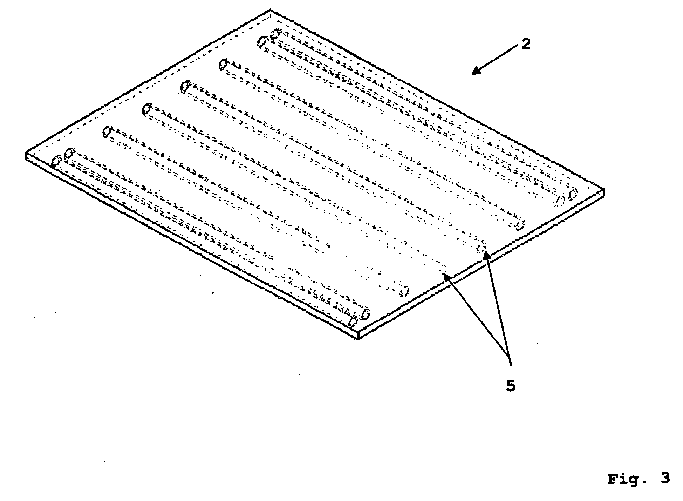

In Fig. 3 ist die Platte 2 mit Rohren 5 von oben gezeigt. Zu sehen sind gestrichelt auch verborgene Kanten. Dadurch sind insbesondere auch die Rohre 5 zu erkennen.

Die Anordnung der Rohre 5 ist in der Regel über die Fläche der Platte 2 gleichmäßig. An den Rändern hingegen, ist die Dichte der Rohre höher. Dadurch wird eine höhere Steifheit und gleichbleibende Tragfähigkeit auch an den Rändern der Plattenfläche gewährleistet.

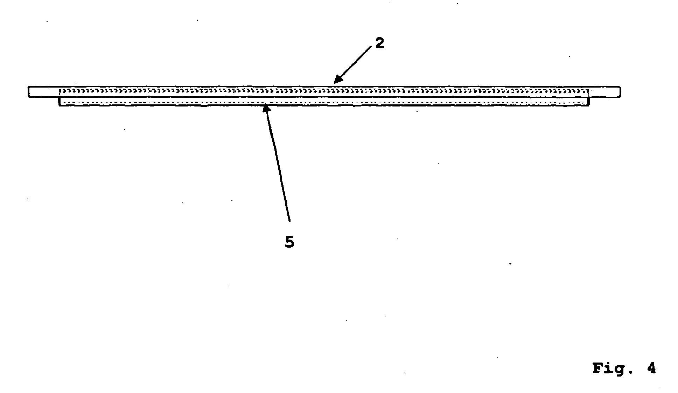

Fig. 4 zeigt eine seitliche Abbildung der Platte 2 mit Rohren 5. Verborgene Kanten sind gestrichelt dargestellt. Zu erkennen ist, dass die Rohre 5 in Aussparungen in der Platte 2 integriert sind. Die Ausmaße der Rohre 5 und der Aussparungen kann der Fachmann anhand der Nutzlasten bestimmen.

Beispielsweise kann bei einer Plattendicke von 8mm eine Tiefe der Aussparungen von 4mm und ein Rohrdurchmesser von 8mm gewählt werden.

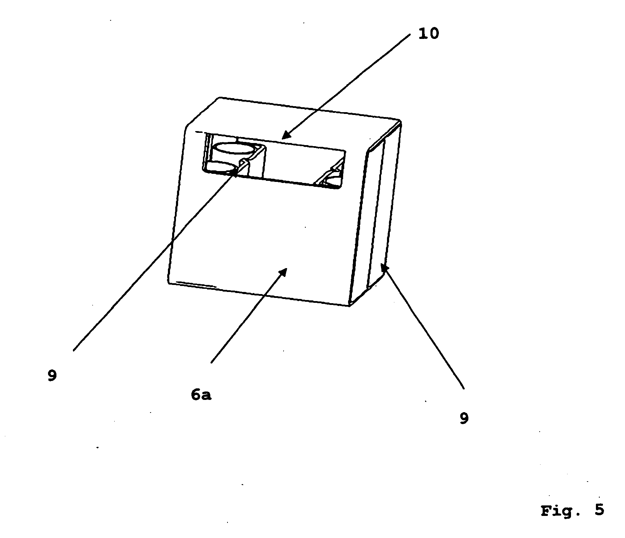

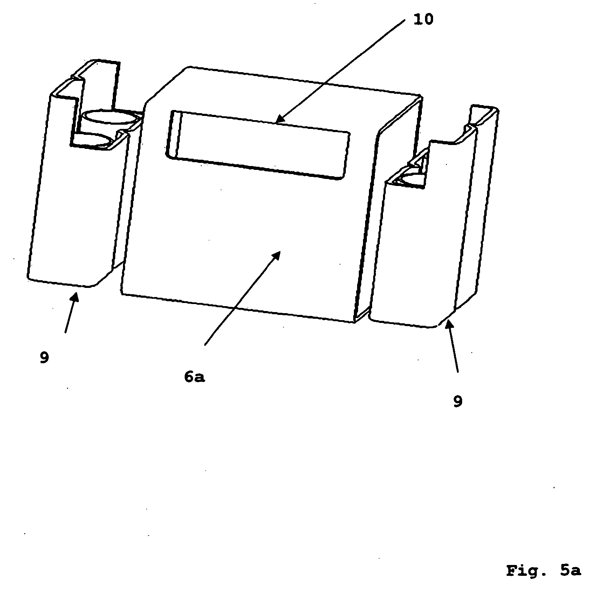

Fig. 5 zeigt einen Palettenfuß 6 aus eckigem Kartonrohr 6a, in das zwei geformte Seitenteile 9 eingesetzt sind. Zu erkennen ist auch die Stanzung 10 zur Einführung der Untertraverse 7. Dadurch, dass ein eckiges Rohr verwendet wird, werden gute Handhabbarkeit und Stapelfähigkeit erzielt. Es können aber auch andere Palettenfußformen gewählt werden. Die geformten Seitenteile 9, mit den stehend eingebrachten Rohren, erhöhen die Stabilität und Tragfähigkeit der Palettenfüße 6. Es ist jedoch auch denkbar ein geschlossenes eckiges Rohr oder andere Formen zur Ausbildung der Palettenfüße 6 zu verwenden. So könnte beispielsweise ein rundes Rohr mit Symmetrieachse senkrecht zur Plattenoberfläche eingesetzt werden.

Fig. 5A zeigt die Baugruppen, aus denen ein Palettenfuß 6 zusammengebaut wird.

### Bezugszeichenliste

- 1: Transportpalette
- 2: Platte
- 3: Oberseite der Platte
- 4: Unterseite der Platte
- 5: Rohr in Platte eingearbeitet
- 6: Palettenfuß
- 6a: Offenes Kartonrohr mit eckigem Querschnitt
- 7: Untertraverse
- 8: Untertraversenrohr
- 9: geformtes Seitenteil
- 10: Stanzung im offenen Kartonrohr zur Aufnahme der Untertraverse 8
- 11: Ausfräsungen im Palettenfuß und Untertraverse

## Patentansprüche

1. Platte (2) mit Ober- und Unterseite (3 bzw. 4), wobei die Platte (2) aus einer Masse besteht, die folgende Bestandteile beinhaltet:
a) Papier 70 bis 85 Gew.%,
b) Stärke oder stärkehaltige Biopolymere 5 bis 10 Gew. %,
c) Restwasser und
d) thermoplastisches Material, insbesondere PE, PP und/oder OPP, jedoch weniger als 5 Gew.%,
**dadurch gekennzeichnet, dass** das Restwasser maximal 2 Gew.% beträgt,
und dass die Unterseite (4) mehrere zumindest teilweise integrierte Rohre (5) aufweist und mit Palettenfüßen (6) zu einer Transportpalette verbindbar ist.

2. Platte nach Anspruch 1, **dadurch gekennzeichnet, dass** die Rohre (5) aus Karton-, Papier- und/oder Recyclingpapierlagen gegebenenfalls unter Zugabe von Klebstoffen gewickelt sind.

3. Platte nach einem der Ansprüche 1 oder 2, **dadurch gekennzeichnet, dass** der Anteil an thermoplastischem Material in der Platte (2) 2 bis 4,9 Gew.% beträgt.

4. Transportpalette (1), aufweisend eine Platte (2) nach einem oder mehreren der vorstehenden Ansprüche 1 bis 3.

5. Transportpalette nach Anspruch 4, **dadurch gekennzeichnet, dass** die Rohre (5) aus Karton-, Papier- und/oder Recyclingpapierlagen gegebenenfalls unter Zugabe von Klebstoffen gewickelt sind.

6. Transportpalette nach einem der Ansprüche 4 oder 5, **dadurch gekennzeichnet, dass** die Palettenfüße (6) und Untertraversen (7) aus Karton-, Papier- und/oder Recyclingpapierlagen und gegebenenfalls Klebstoff bestehen.

7. Transportpalette nach Anspruch 4 oder 5, **dadurch gekennzeichnet, dass** die Palettenfüße (6) und Untertraversen (7) zu einem Teil der aus der Platte (2) herausragenden Teile der Rohre (5) passgerechte Aussparungen und/oder Ausfräsungen (11) aufweisen, mit denen sie an einem oder mehreren der Rohre (5) befestigt, insbesondere verklebt, sind.

8. Transportpalette nach einem der vorhergehenden Ansprüche 4 bis 7, **dadurch gekennzeichnet, dass** die Palettenfüße (6) folgende Merkmale aufweisen:
a) ein Kartonrohr oder ein zur Platte (2) hin offenes Kartonrohr (6a) mit eckigem Querschnitt, welches 1-seitig oder 2-seitig eine Ausstanzung (10) zur Aufnahme der Untertraversen (7) besitzt;
b) Last tragende, das Kartonrohr (6a) verschließende und stabilisierte geformte Seitenteile (9).

9. Transportpalette nach einem der vorhergehenden Ansprüche 4 bis 8, **dadurch gekennzeichnet, dass** die Untertraversen (7) Untertraversenrohre (8) beinhalten, die aus Papier- oder Recyclingpapierlagen gewickelt sind.

10. Transportpalette nach einem der vorhergehenden Ansprüche 4 bis 9, **dadurch gekennzeichnet, dass** der Anteil an thermoplastischen Material in der Platte (2) 2 bis 4,9 Gew.% beträgt.

## Claims

1. A plate (2) with upper and lower face (3 or 4), wherein the plate (2) consists of a mass, which contains the following components:
a) paper 70 to 85 % in weight,
b) starch or starch containing biopolymers 5 to 10 % in weight,
c) residual water and
d) a thermoplastic material, in particular PE, PP and/or OPP, however less than 5 % in weight,
**characterised in that** the residual water amounts to 2 % in weight at least, and the lower crosshead (4) includes at least several, partially integrated pipes (5) and may be connected with pallet feet (6) to a transport pallet.

2. A plate according to claim 1, **characterised in that** the pipes (5) are rolled with layers of cardboard, paper and/or recycling paper possibly with the addition of glues.

3. A plate according to any of the claims 1 or 2, **characterised in that** the proportion of thermoplastic material in the plate (2) amounts to 2 to 4.9 % in weight.

4. A transport pallet (1), including a plate (2) according to one or several of the preceding claims 1 to 3.

5. A transport pallet according to claim 4, **characterised in that** the pipes (5) are rolled with layers of cardboard, paper and/or recycling paper possibly with the addition of glues.

6. A transport pallet according to any of the claims 4 or 5, **characterised in that** the pallet feet (6) and the lower crossheads (7) consist of layers of cardboard, paper and/or recycling paper possibly with the addition of glues.

7. A transport pallet according to claim 4, **characterised in that** the pallet feet (6) and lower crossheads (7) include recesses and/or countersinks (11) matching the parts of the pipes (5) protruding partially from the plate (2), with which they are attached, in particularly glued, to one or several pipes (5).

8. A transport pallet according to one of the preceding claims 4 to 7, **characterised in that** the pallet feet (6) include the following features:
a) a cardboard pipe or a cardboard pipe (6a) open to the plate (2) with a square cross section, possessing a cutout (10) for accommodating the lower crossheads (7) on one or two faces;
b) Load carrying, stabilised and shaped lateral parts (9) enclosing the cardboard pipe (6a).

9. A transport pallet according to one of the preceding claims 4 to 8, **characterised in that** the lower crossheads (7) include the lower crosshead pipes (8), which are rolled of paper or layers of recycling paper.

10. A transport pallet according to one of the preceding claims 4 to 9, **characterised in that** the proportion of thermoplastic material in the plate (2) amounts to 2 to 4.9 % in weight.

## Revendications

1. Plaque (2) avec face supérieure ou inférieure (3 ou 4), la plaque (2) se composant d'une masse contenant les éléments suivants :
a) papier 70 à 85 % en poids,
b) amidon ou biopolymères contenant de l'amidon 5 à 10 % en poids,
c) eau résiduelle et
d) matériau thermoplastique, en particulier PE, PP et/ou OPP, cependant moins de 5 % en poids,
**caractérisée en ce** l'eau résiduelle correspond au maximum à 2 % en poids,
et en ce que la face inférieure (4) présente plusieurs tubes (5) au moins partiellement intégrés et peut être relié à une palette de transport à l'aide de pieds de palette (6).

2. Plaque selon la revendication 1, **caractérisée en ce** les tubes (5) sont laminés en couches de carton, de papier et/ou de papier de recyclage le cas échéant avec addition de colles.

3. Plaque selon l'une des revendications 1 ou 2, **caractérisée en ce que** la portion de matériau thermoplastique dans la plaque (2) est de 2 à 4,9 % en poids.

4. Palette de transport (1), présentant une plaque (2) selon une ou plusieurs des revendications précédentes 1 à 3.

5. Palette de transport selon la revendication 4, **caractérisée en ce que** les tubes (5) sont laminés en couches de carton, de papier et/ou de papier de recyclage le cas échéant avec addition de colles.

6. Palette de transport selon l'une des revendications 4 ou 5, **caractérisée en ce que** les pieds de palette (6) et les traverses inférieures (7) consistent de couches de carton, de papier et/ou de papier de recyclage le cas échéant avec addition de colles.

7. Palette de transport selon la revendication 4 ou 5, **caractérisée en ce que** les pieds de palette (6) et les traverses inférieures (7) présentent des évidements et/ou fraisures (11) correspondant avec précision aux parties de tube (5) dépassant de la plaque (2), avec lesquels ils sont fixés, voire collés, à un ou plusieurs tubes (5).

8. Palette de transport selon l'une quelconque des revendications précédentes 4 à 7, **caractérisée en ce que** les pieds de palette (6) présentent les caractéristiques suivantes :
a) un tube de carton ou un tube de carton (6a) de section carrée ouvert en direction de la plaque (2), possédant sur une ou deux faces une découpe à l'emporte-pièce (10) destinée à recevoir les traverses inférieures (7) ;
b) des éléments latéraux porteurs (9) conformés, stabilisés et renfermant le tube de carton (6a).

9. Palette de transport selon l'une quelconque des revendications précédentes 4 à 8, **caractérisée en ce que** les traverses inférieures (7) comportent des tubes (8) de traverses inférieures, qui sont laminés en papier ou couches de papier de recyclage.

10. Palette de transport selon l'une quelconque des revendications précédentes 4 à 9, **caractérisée en ce que** la portion de matériau thermoplastique dans la plaque (2) est de 2 à 4,9 % en poids.
